# EUROPEAN PATENT APPLICATION

(11) **EP 1 008 447 A2**
(43) Date of publication of application: **14.06.2000**
(21) Application number: 99124556.4
(22) Date of filing: 09.12.1999
(51) Int. Cl.: B32B 27/40

(54) **Process for preparing foam cushions having "TPU" laminate**

(30) Priority: 09.12.1998 US 208345
(71) Applicant: THE DOW CHEMICAL COMPANY, Midland, Michigan 48674 (US)
(72) Inventor: Parks, Franklin E., Jones Creek Texas 77541, (US); O'Neill, Robert E., Texas 77531 (US); Lidy, Werner A., 69198 Schriesheim, (DE)
(74) Representative: Weiss, Wolfgang, Dipl.-Chem. Dr.

(57) **Abstract**

The present invention is a carpet having an attached polyurethane cushion, prepared by contacting a foam underlay having an adherent thermoplastic polyurethane coating with a backed carpet substrate. The foam underlay and carpet substrate are contacted under conditions suitable for forming a bonded layer between the foam underlay and the backed carpet without causing damage to either the underlay or the carpet.

## Description

### BACKGROUND OF THE INVENTION

The present invention relates to thermoplastic polyurethane (TPU) laminate articles. This invention particularly relates to TPU laminate carpet underlays and to a process for making same.

Articles having attached foam layers are well known. For example, carpets and other substrates having attached polyurethane foam layers as backing are described in U.S. Patent Nos.: 3,755,212; 3,821,130; 3,862,879; 4,022,941; 4,171,395; 4,278,482; 4,286,003; 4,296,159; 4,405,393; 4,483,894; 4,512,831; 4,515,646; 4,595,436; 4,611,044; 4,657,790; 4,696,849; 4,853,054; 4,853,280 and, 5,104,693. Generally, carpets having attached cushions are prepared by tufting or weaving yarn into a primary backing, applying an adhesive to the primary backing to bind the tufted material into the backing, applying a laminate coat to the adhesive coat, and finally applying a foam cushion.

Manufacture of a carpet having an attached polyurethane cushion typically requires application of a polyurethane-forming reaction mixture to the carpet substrate before the polyurethane forming reaction is complete. The polyurethane reaction is typically completed after application of a polyurethane forming reaction mixture to a carpet substrate. Current technology thus limits the use of this carpet manufacturing process to manufacturers having access, at the manufacturing site, to specialized equipment which: (1) mixes the components of a polyurethane-forming composition, including gasses or blowing agents; and (2) delivers the mixture to the substrate to be coated. The initial capital outlay necessary to produce carpets having attached polyurethane cushions can be a significant barrier to one seeking to manufacture such articles.

Coatings prepared from TPU materials are known. Typically, however, a premade TPU, also known as a polyurethane hot melt, film is not applied to a substrate because the temperature required to join the TPU and the substrate can possibly damage the substrate.

It would be desirable in the art of preparing laminate articles to prepare a TPU laminate article that can be applied to a substrate after cure of the TPU, under conditions that would not damage the substrate. It would also be desirable, in the art of preparing carpet articles, to prepare a carpet having an attached cushion from an attachable TPU/polyurethane foam laminate and carpet Greige goods.

### SUMMARY OF THE INVENTION

In one aspect, the present invention is a process for preparing a laminate article by a process comprising the steps of: (a) applying uncured TPU to at least one surface of a first substrate; (b) curing the TPU on the first substrate to form a cured TPU coat; (c) contacting the TPU coat with a second substrate; and (d) joining the first substrate to the second substrate by forming a bonded layer between the first substrate and the second substrate.

In another aspect, the present invention is a polyurethane foam underlay comprising a polyurethane foam having a TPU layer adherent to at least one surface of the foam.

In another aspect, the present invention is a laminate article having an attached polyurethane cushion prepared by a process comprising the steps of: (a) applying uncured TPU to at least one surface of a polyurethane foam underlay; (b) curing the TPU coat on the foam underlay such that an exposed surface of a cured TPU coat is formed on the foam underlay; (c) contacting the exposed surface of the TPU coat with a polymer-backed substrate, such that the surface of the polymer coat and the surface of the TPU coat are adjacent; and (d) joining the foam underlay to the substrate by forming a bonded layer between the foam underlay and the substrate.

### DESCRIPTION OF THE PREFERRED EMBODIMENTS

In one embodiment, the present invention is a TPU laminate article and a process for preparing a TPU laminate article. The laminate article is prepared by joining two substrates together by means of a TPU adhesive layer between the two substrates. The substrates can each individually be any material to which the TPU layer will adhere. The substrates can each individually be: materials made from wood or wood products, such as, for example, plywood, pressboard, or paper. The substrates can each individually be textile products such as broadloom carpet; carpet tile; automotive carpet; fabrics for automotive trim; paneling and trunk liners; synthetic playing surfaces; tennis ball covers; drapery fabrics; wall-covering fabric; woven and non-woven scrim and the like. The substrates can each individually be polymeric materials, such as polyurethanes. The substrates can each individually be composite materials such as rebond, or articles having a polymer laminate coat, such as a carpet having a polyurethane laminate coat, for example.

In the present invention, a TPU coat can be applied to at least one surface of a first substrate. When applied, the TPU is in a substantially uncured (hereinafter uncured) state, meaning that the polyurethane forming reaction is only partially complete. While a quantitative measure of the extent of the reaction can be difficult to ascertain, a qualitative determination of the extent of cure can be readily discerned. In an uncured state, TPU is a fluid polymer that can be spread onto the surface of a substrate. After the TPU is substantially cured, the TPU does not exhibit the flow characteristics of a liquid. After cure, a TPU/substrate laminate article (TPU laminate) is obtained, wherein the TPU laminate has a TPU bonded layer, or coat, as its surface layer. The TPU surface layer can be bonded to a second substrate after heat treatment, so that a new laminate article is obtained having a TPU layer as an adhesive layer between the first and second substrates.

In another embodiment, the present invention is an attachable carpet underlay, wherein the attachable underlay has a coat of TPU on at least one surface of the underlay.

In still another embodiment, the present invention is a carpet having an attached underlay, wherein the carpet includes a TPU adhesive layer between the carpet backing and the attached underlay.

In another embodiment, the present invention is a process for preparing a carpet having an attached underlay, wherein the carpet includes a TPU adhesive layer between the carpet backing and the attached underlay. Preparing a carpet of the present invention preferably includes a procedure for first obtaining an attachable underlay. To obtain an attachable underlay of the present invention, uncured TPU can be applied to a foam underlay and cured on the surface of the underlay. In a first step, the TPU is preferably applied such that substantially all of the underlay surface is coated with the uncured TPU. The TPU can be applied according to any conventional method used to apply a coating to a substrate. For example, the TPU can be sprayed on, painted on with a brush, or applied with a knife. In a subsequent step, the TPU can be cured on the surface of the underlay at a temperature of less than about 200°C. Cure of the TPU coat can be substantially complete in less than about 30 minutes.

An attachable underlay can be joined to a carpet substrate in a subsequent step, wherein the underlay is attached to the carpet substrate by means of heat treating the TPU adhesive layer and pressing it to the surface of the carpet substrate. The carpet substrate can have a polymer coating on the surface to be contacted with the TPU coating on the underlay, which can facilitate the bonding of the underlay to the carpet. The polymer coat on the carpet can be a polyurethane coat. A particular advantage of the present invention is that the attachable underlay can be rolled, stored, and/or shipped and joined to a carpet substrate at a different location from where the attachable underlay is prepared.

TPU suitable for the practice of the present invention is particularly a low melt TPU, i.e. a TPU having a low melting (softening) point. A TPU of the present invention can be applied directly to the surface of a substrate and cured on the surface of the substrate to form a TPU laminate that can be attached to a second substrate. For example, TPU can be applied to a polyurethane foam cushion to obtain a TPU laminate of the present invention which can be useful as an attachable foam cushion. An attachable foam cushion of the present invention can be joined to a carpet substrate in a subsequent step to obtain a carpet having an attached foam cushion. The low melt characteristics of a TPU of the present invention allow an attachable cushion of the present invention to be attached to a carpet or other substrate at a low temperature which can avoid damage to a carpet or other heat sensitive substrate. Conversely, joining a carpet and a TPU/foam cushion laminate prepared from a high-melt TPU can require a temperature that could damage the carpet. In the practice of the present invention, an attachable cushion can be attached to a carpet at a temperature of less than about 150°C.

A TPU suitable for the practice of the present invention can be prepared by contacting an isocyanate-reactive material with a polyisocyanate, under conditions suitable for a polyurethane-forming reaction to take place. As used herein, the terms "isocyanate" and "polyisocyanate" are used interchangeably.

A catalyst can be used to promote formation of a TPU. Catalysts useful for preparing a TPU can be any that is known to be useful in preparing polyurethane compounds. Suitable catalysts can include tertiary amines, organometallic compounds, like compounds and mixtures thereof For example, suitable catalysts include di-n-butyl tin bis(mercaptoacetic acid isooctyl ester), dimethyltin dilaurate, dibutyltin dilaurate, dibutyltin sulfide, stannous octoate, lead octoate, ferric acetylacetonate, bismuth carboxylates, triethylenediamine, N-methyl morpholine, like compounds and mixtures thereof An amount of catalyst is advantageously employed such that a relatively rapid cure is obtained. If an organometallic catalyst is employed, such a cure can be obtained using from about 0.01 to about 0.5 parts per 100 parts of the polyurethane-forming composition, by weight. If a tertiary amine catalyst is employed, the catalyst preferably provides a suitable cure using from about 0.01 to about 3 parts of tertiary amine catalyst per 100 parts of the polyurethane-forming composition, by weight. Both an amine type catalyst and an organometallic catalyst can be employed in combination.

A reaction can also be promoted by heating the components of the reaction mixture within a suitable range for carrying out the reaction. A reaction can be carried out at a temperature less than about 250 °C.

Isocyanate-reactive compounds suitable for preparing a TPU of the present invention can include active hydrogen-containing compounds. Active hydrogen-containing compounds are compounds wherein at least one hydrogen atom is bonded to an electronegative atom such as sulfur, nitrogen, or oxygen. Active hydrogen-containing compounds described herein can contain any combination of hydroxyl, amino, and mercaptyl functionality in addition to other active hydrogen groups. Active hydrogen groups can be reacted with isocyanate groups to form a TPU. Active hydrogen compounds suitable for the practice of the present invention are well-known to those skilled in the art of preparing thermoplastic polyurethane polymers.

A polyol can be an example of an isocyanate-reactive compound suitable for preparing a TPU of the present invention. A polyol useful for preparing a TPU of the present invention can have an average equivalent weight of from about 62 to about 5000. The average equivalent weight of any compound can be determined by dividing the average molecular weight of the compound by the functionality of the compound. While a wide range of materials can be used, polyether polyols are preferred based on their performance and wide availability. Polymers of propylene oxide which are at least partially end-capped with ethylene oxide are particularly preferred.

An isocyanate or polyisocyanate suitable for the practice of the present invention can be any isocyanate that is known in the art of preparing polyurethane polymers. Suitable isocyanates include, for example, aliphatic or aromatic isocyanates. Aromatic isocyanates suitable for use herein include, for example: phenyl diisocyanate; 2,4-toluene diisocyanate; 2,6-toluene diisocyanate; ditoluene diisocyanate; naphthalene 1,4-diisocyanate; 2,4'- and/or 4,4'-diphenylmethane diisocyanate (MDI); polymethylene polyphenylenepolyisocyanates (polymeric MDI); like compounds, and mixtures thereof. Suitable aliphatic isocyanates include, for example: 1,6-hexamethylene diisocyanate; isophorone diisocyanate; 1,4-cyclohexyl diisocyanate; like compounds and mixtures thereof. Prepolymers prepared by reacting a polyol or chain extender with a polyisocyanate are suitable, as well.

A TPU of the present invention is a low molecular weight, linear material. A TPU of the present invention can have a molecular weight of less than about 5000.

A TPU laminate can be obtained by wet application (i.e. prior to cure) of a TPU onto at least one surface of a substrate material, followed by cure of the TPU on the surface of the substrate. Various substrates can be suitable for use in the practice of the present invention. For example, a polyurethane foam is a suitable substrate. Other examples of suitable substrates include: corona treated polyethylene; carpet underlay materials such as rebonded material, SBU latexes, and the like; paper products such as to make an adhesive tape, wall-paper and the like; and fabrics, textiles, and the like.

A polyurethane foam cushion suitable for use in the practice of the present invention can be prepared by any method known to one skilled in the art of preparing polyurethane foams. Methods of preparing polyurethane foams are known. In a typical process for preparing a polyurethane foam, an isocyanate-reactive material is contacted with an isocyanate under conditions that promote a reaction between the isocyanate and the isocyanate reactive compound.

In describing the preparation of a polyurethane foam, the term "polyol" can refer to a single polyol or to a mixture of two or more polyols. A polyol suitable for preparing a polyurethane foam cushion suitable for the practice of the present invention can have an average equivalent weight of from about 500 to about 5000, preferably from about 750 to about 2500, and more preferably from about 750 to about 2000. In the present invention, at least about 30 percent, preferably about 50 percent, and more preferably about 60 percent of the hydroxyl functionality of a polyol is primary hydroxyl functionality. While a wide range of materials can be used, polyether polyols are preferred based on their performance and wide availability. Polymers of propylene oxide which are at least partially end-capped with ethylene oxide are particularly preferred.

Polyols of the present invention can be prepared by reacting an alkylene oxide with a suitable polyhydric initiator compound. The alkylene oxide preferably has 2 - 8 carbon atoms. For example suitable alkylene oxides can be ethylene oxide, propylene oxide, 1,2-butylene oxide, 2,3-butylene oxide, styrene oxide, epichlorohydrin, 3-methyl-1,2-butylene oxide, like compounds and mixtures thereof, with propylene oxide being the preferred oxide. The initiator compound can be a polyhydric compound such as water, ethylene glycol, propylene glycol, 1,2-butane diol, 1,3-butane diol, glycerine, trimethylol propane, p,p'-isopropylidine diphenol, aniline, ammonia, ethylene diamine, aminoethylethanolamine, like compounds and mixtures thereof.

A suitable polyol or polyol mixture can have an average functionality of from about 1.4 to about 3.0. Preferably the average functionality of the polyol or polyol mixture is from about 1.6 to about 2.8. More preferably the average functionality is from about 1.99 to about 2.3.

A foam cushion suitable for use with the present invention optionally includes a chain extender. A chain extender is typically a low equivalent weight active hydrogen containing compound having about 2 active hydrogen groups per molecule. A low equivalent weight chain extender typically has an equivalent weight of less than about 200. The active hydrogen groups of a suitable chain extender can be hydroxyl, mercaptyl, or amino groups. If the active hydrogen groups are amino groups then the amine is preferably a sterically hindered amine. A sterically hindered amine is an amine that is substituted with bulky groups that tend to inhibit the reactivity of the amine, for example alkyl groups having 2 or more carbons. An amine chain extender can also be blocked, encapsulated, or otherwise rendered less reactive. Preferred chain extenders include glycols and glycol ethers such as: ethylene glycol; 1,4-butane diol; 1,6-hexamethylene glycol; dipropylene glycol; tripropylene glycol; diethylene glycol; triethylene glycol; cyclohexanedimethanol; the diverse bisphenols; like compounds and mixtures thereof. Suitable amine chain extenders include: methylene bis(o-chloroaniline); NaCl-blocked methylene dianiline; diethyltoluenediamine; like compounds, and mixtures thereof.

A suitable polyisocyanate can be any that is known and used in the art of preparing polyurethane polymers. A useful polyisocyanate can be aliphatic or aromatic. Aromatic polyisocyanates suitable for use herein include: phenyl diisocyanate; 2,4-toluene diisocyanate; 2,6-toluene diisocyanate; ditoluene diisocyanate; naphthalene 1,4-diisocyanate; 2,4'- and/or 4,4'-diphenylmethane diisocyanate (MDI); polymethylene polyphenylenepolyisocyanates (polymeric MDI); like compounds, and mixtures thereof. Suitable aliphatic polyisocyanates include: the hydrogenated derivatives of suitable aromatic polyisocyanates such as 1,6-hexamethylene diisocyanate; isophorone diisocyanate; 1,4-cyclohexyl diisocyanate; like compounds and mixtures thereof. Prepolymers prepared by reacting a polyol or chain extender with a polyisocyanate are suitable, as well.

A polyurethane-forming composition suitable for preparing a polyurethane foam cushion of the present invention can include a polyisocyanate having an average functionality of greater than about 1.9. The average functionality of a polyisocyanate is the average number of isocyanate groups per molecule. Typically, a polyisocyanate useful herein has an average functionality of from about 1.9 to about 3.0. The polyisocyanate preferably has an average functionality of about 1.95 to about 2.5, and more preferably from about 1.95 to about 2.4. Most preferably, the polyisocyanate has an average functionality of from about 2.0 to about 2.4.

To prepare a polyurethane foam cushion suitable for use in the practice of the present invention, an isocyanate index of from about 85 to about 130 can be used. To prepare a carpet having an attached cushion of the present invention, it can be preferable to apply a polyurethane precoat layer to the carpet backing. A polyurethane precoat layer can be prepared using an isocyanate index of from about 85 to about 130. A isocyanate index can be calculated by multiplying the ratio of isocyanate equivalents to active hydrogen equivalents by 100. Preferably the isocyanate index is in the range of from about 85 to about 115, and more preferably from about 85 to about 110 for a foam cushion.

A catalyst can be used to prepare a polyurethane foam cushion useful in the practice of the present invention. Suitable catalysts are known in the art of preparing polyurethanes, and include tertiary amines, organometallic compounds, like compounds and mixtures thereof For example, suitable catalysts include those described herein as suitable to prepare a TPU of the present invention. An amount of catalyst is advantageously employed such that a relatively rapid cure to a tack-free state is obtained. If an organometallic catalyst is employed, such a cure can be obtained using from about 0.01 to about 0.5 parts per 100 parts of the polyurethane-forming composition, by weight. If a tertiary amine catalyst is employed, the catalyst preferably provides a suitable cure using from about 0.01 to about 3 parts of tertiary amine catalyst per 100 parts of the polyurethane-forming composition, by weight. Both an amine type catalyst and an organometallic catalyst can be employed in combination.

A polyurethane foam cushion suitable for use in the practice of the present invention can include a filler material. The filler material can be any conventional filler, such as, for example: milled glass, calcium carbonate, aluminum trihydrate (ATH), talc, bentonite, antimony trioxide, kaolin. The filler can be fly ash, or any other known filler. In the practice of the present invention, any known filler or mixture of fillers is suitable for use. The concentration of filler to be used can be determined by various factors, including the end-use application of the article, the cost of producing the article, or the affect of the filler on the color, texture, or other physical properties of the article.

The polyurethane-forming composition suitable for preparing a polyurethane foam cushion of the present invention optionally includes a filler wetting agent. A filler wetting agent generally performs the function of compatiblizing the filler with the other components of a polyurethane-forming composition. A filler wetting agent can be included in a polyurethane-forming composition of the present invention at a concentration of at least about 0.5 parts per 100 parts of filler, by weight. Preferably the filler wetting agent is included at a concentration of from about 0.5 to about 1.5 parts per 100 parts of filler, more preferably from about 0.75 to about 1.25 parts per 100 parts of filler.

A polyurethane foam cushion suitable for use in the practice of the present invention can include other optional components. For example, a polyurethane-forming composition of the present invention can include a surfactant, a blowing agent, a flame retardant, pigments, antistatic agents, reinforcing fibers, antioxidants, preservatives, water scavengers, acid scavengers, and the like. Examples of suitable blowing agents include gases such as air carbon dioxide, nitrogen, argon, helium, and the like; liquids such as water, volatile halogenated alkanes such as the various chlorfluoromethanes and chlorfluoroethanes; azo-blowing agents such as azobis(formamide). Preferred in the practice of this invention is the use of a gas as a blowing agent. Particularly preferable is the use of air as a blowing agent.

A surfactant can be useful in the present invention for preparing a polyurethane foam cushion. Suitable surfactants include block copolymers of ethylene oxide and silicone surfactants. For example, suitable block copolymers of ethylene oxide include copolymers having at least 60 weight percent of the polymer being derived from oxyethylene units, 15 to 40 weight percent of the polymer being derived from polydimethylsiloxane units, and the polymer having a molecular weight of less than 30,000, as described in U.S. Pat. No. 4,483,894. A surfactant can be included in a formulation of the present invention in an amount ranging from about 0.01 to about 2 parts per 100 parts by weight of polyol.

### EXAMPLES

The following examples and comparative example are meant to be illustrative of the present invention. These examples and comparative example are not intended to limit the scope of the claims of the present invention and they should not be interpreted in that manner.

### Example 1

A mixture is prepared by blending Voranol V1200 (50 pphp), Voranol V425 (44 pphp), dipropylene glycol (4 pphp), monol (2 pphp), CaCO₃ (90 pphp), and UL6 catalyst (0.02 pphp). The mixture is applied as a thin coat to a piece of frothed polyurethane foam, and oven cured at approximately 110°C for about 5 minutes. The coated foam is allowed to cool until the TPU coating is tack-free. The coated foam and a piece of carpet greige goods having a polyurethane precoat are heated to 90°C, pressed and held together while the samples cool. The foam cushion attached in this manner exhibits an adhesive force greater than the tear properties of the foam.

The present invention is a carpet having an attached polyurethane cushion, prepared by contacting a foam underlay having an adherent thermoplastic polyurethane coating with a backed carpet substrate. The foam underlay and carpet substrate are contacted under conditions suitable for forming a bonded layer between the foam underlay and the backed carpet without causing damage to either the underlay or the carpet.

## Claims

1. A process for preparing a laminate article by joining together two substrates, the process comprising the steps of:
(a) applying a coat of uncured thermoplastic polyurethane (TPU) to at least one surface of a first substrate;
(b) curing the TPU coat on the surface of the first substrate to form a cured TPU coat on the first substrate;
(c) contacting the TPU coat with a second substrate; and
(d) joining the first substrate to the second substrate by pressing the two substrates together under temperature conditions suitable for forming a bonded layer between the first substrate and the second substrate.

2. The process of Claim 1 wherein:
(a) the laminate article is a carpet having an attached underlay;
(b) the first substrate is a carpet underlay; and
(c) the second substrate is a carpet.

3. The process of Claim 2 wherein the carpet has a polymer coating on the surface contacting the underlay.

4. The process of Claim 3 wherein the carpet underlay is a polyurethane foam cushion.

5. The process of Claim 4 wherein the polyurethane foam cushion is joined to the carpet at a temperature of less than about 250 °C.

6. The process of Claim 1 wherein:
(a) the first substrate is a material suitable for use as a backing for tape; and
(b) the second substrate is a carpet.

7. A polyurethane foam underlay comprising a polyurethane foam having a thermoplastic polyurethane coating adherent to the foam underlay.

8. A TPU laminate article useful as seam tape for carpet, prepared by a process comprising the steps:
(a) applying a coat of uncured thermoplastic polyurethane (TPU) to at least one surface of a first substrate;
(b) curing the TPU coat on the surface of the first substrate to form a cured TPU coat on the first substrate.
